# EUROPÄISCHE PATENTSCHRIFT

(11) **EP 0 554 812 B1**
(45) Veröffentlichungstag und Bekanntmachung des Hinweises auf die Patenterteilung: **15.01.1997**
(21) Anmeldenummer: 93101469.0
(22) Anmeldetag: 30.01.1993
(51) Int. Cl.: G05D 23/00

(54) **Vorrichtung zur manuellen Temperaturabsenkung für Thermostatschaltuhren**
Device for manually lowering temperature for a thermostatic timing switch.
Dispositif de diminution manuelle de température de minuterie pour un thermostat

(30) Priorität: 03.02.1992 DE 9201262 U
(43) Veröffentlichungstag der Anmeldung: 11.08.1993
(73) Patentinhaber: GRÄSSLIN KG, D-78112 St. Georgen (DE)
(72) Erfinder: Straub, Josef, W-7743 Furtwangen (DE); Ulmer, Manfred, W-7742 Dt. Georgen (DE)
(74) Vertreter: Thoma, Friedrich, Dipl.-Ing.(FH)

(56) Entgegenhaltungen:
- DE-A- 2 432 811
- DE-A- 2 504 208
- DE-A- 2 548 206
- DE-A- 3 241 533
- US-A- 4 123 628

## Beschreibung

Die Erfindung betrifft eine Vorrichtung zur manuellen Temperaturabsenkung für Thermostatschaltuhren mit den Merkmalen nach dem Oberbegriff des Schutzanspruchs 1.

Bei derartigen Thermostatschaltuhren, bei denen der Raumtemperaturregler in einem bestimmten, insbesondere von den schaltzeitkonform programmierten Schaltreitern auf einer zeithaltend umlaufenden Zeitscheibe, zeitgesteuerten Bereich, zum Zwecke einer Raumtemperaturabsenkung motorisch zeitgesteuert eingestellt wird, ist es erforderlich, daß der Raumthermostatregler zusätzlich zur motorischen Einstellung auch jederzeit zum Zwecke der Temperaturabsenkung, manuell eingestellt werden kann. Dabei soll sichergestellt sein, daß eine derartige Vorrichtung zur manuellen Einstellung des zeitgesteuerten Raumthermostatreglers einfach im Aufbau und wirtschaftlich in der Herstellung und der Montage ist.

Bei den bekanntgewordenen derartigen Thermostatschaltuhren mit manueller Temperaturabsenkung ist die dortige manuell bewirkbare Temperaturabsenkungsvorrichtung technisch relativ aufwendig ausgeführt, mit dem Nachteil, daß ein Teil dieser Vorrichtungen recht störanfällig sind und häufig auch das mechanische Drehmoment der motorischen Einstellung des Thermostatreglers durch Reibungsverluste erheblich belastet wird.

Der Erfindung liegt die Aufgabe zugrunde, eine Vorrichtung zur manuellen Temperaturabsenkung für Thermostatschaltuhren der eingangsgenannten Art zu schaffen, bei der die Nachteile der bekannten manuellen Temperaturabsenkungen beseitigt sind, die außerdem einfach in ihrem technischen Aufbau ist, vernachlässigbare Reibungsverluste aufweist und die wirtschaftlich in der Herstellung und der Montage ist.

Diese Aufgabe wird mit den Merkmalen im kennzeichnenden Teil des Schutzanspruchs 1 gelöst und in den Unteransprüchen sind weitere vorteilhafte Einzelheiten beansprucht.

Ein Ausführungsbeispiel ist in den Zeichnungen dargestellt und wird im folgenden näher erläutert. Es zeigen
- Fig. 1: eine Vorderansicht auf die technischen Einstell- und Regelvorrichtungen einer Raumthermostatschaltuhr mit dort fehlendem Aussengehäuse,
- Fig. 2: eine Seitenansicht auf die Raumthermostatschaltuhr nach Fig. 1.

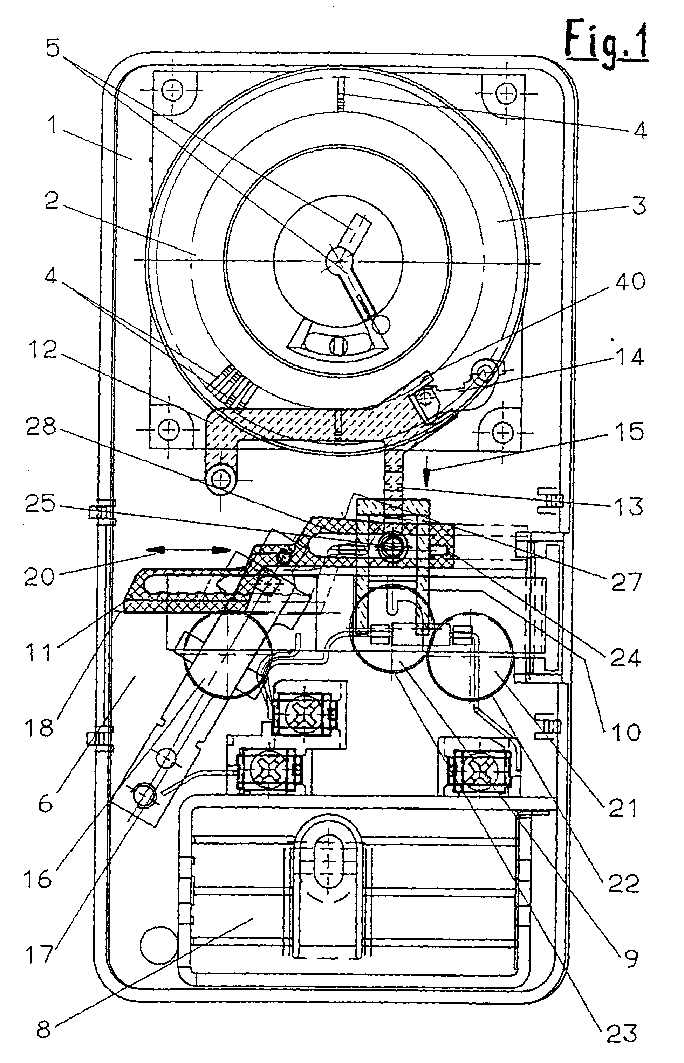

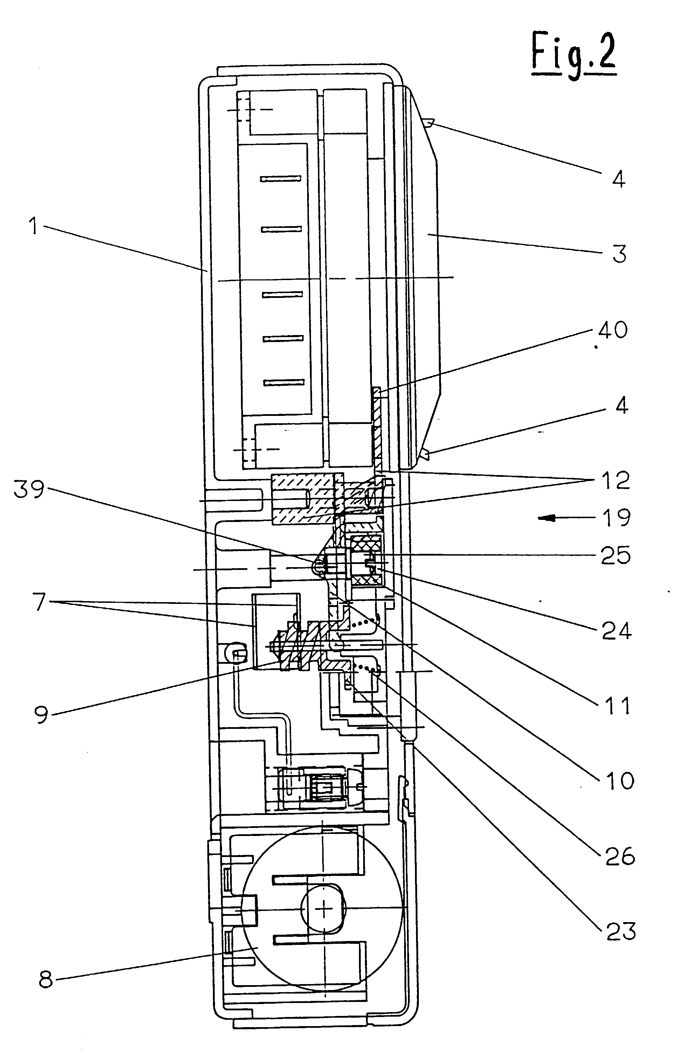

Die, in den Fig. 1 und 2, dargestellte Raumthermostatschaltuhr besteht im wesentlichen aus einer rückseitigen, schalenförmigen Montageplatte 1, mit einem dort einseitig angeordneten modular aufgebauten Schaltuhrwerk 2 das mit einer vorderseitigen Zeitscheibe 3 mit dort am Umfang unverlierbar angeordenten Schaltreitern 4 und einem, zu den Schaltreitern 4, konzentrischen, die Tageszeit anzeigendes Zeigerwerk 5, versehen ist.

6 bezeichnet eine modular aufgebaute Thermostatbaugruppe mit insbesondere einem einseitig gelagerten Bimetallschalter 7, welche im Mittelteil der Montageplatte 1 angeordnet ist. 8 kennzeichnet ein in die Montageplatte 1 einstückig integriertes Batteriefach für eine Stromversorgungsbatterie.

Wie die Fig. 1 und 2 desweiteren zeigen, steht der Bimetallschalter 7 mit einer Einstellspindel 9 in Eingriff, in die wiederum ein Winkelhebel 10 eingreift. Der Winkelhebel 10 wird andererseits von einem, mit einer schiefen Ebene versehenen Schieber 11 beaufschlagt, der mit einem einseitig an einem sogenannten Auslösehebel 12 angeordneten Steuerhebel 13 in Eingriff steht, wobei dort ein zweiter Steuerhebel 40 am einseitig gelagerten Auslösehebel 12 mit einem Steuerhebel 14 in Eingriff ist, der von den schaltprogrammkonform programmierten Schaltreitern 4 auf der Zeitscheibe 3 beaufschlagt wird.

D.h. wird der Auslösehebel 12 zum Zwecke einer Temperaturabsenkung, in Pfeilrichtung 15, motorisch zeitgesteuert, von dem, durch die Schaltreiter 4 beaufschlagten Steuerhebel 14 bewegt, dann wird über den Winkelhebel 10 die Einstellspindel 9 beaufschlagt, und der federbelastete Bimetallschalter 7 um den Temperaturabsenkungswert mechanisch eingestellt.

Insbesondere durch den entsprechend ausgebildeten Winkelhebel 10 wird die Drehbewegung des Auslösehebels 12 in eine Hubbewegung an der Einstellspindel 9 umgelenkt. Über diesen Winkelhebel 10 ist es nun, gemäß der Erfindung, außerdem möglich, den Temperaturabsenkungwert für den Bimetallschalter 7 manuell einzustellen. Zu diesem Zweck ist ein, von der Vorderseite 19 her bedienbarer Drehknopf 16 vorgesehen, der insbesondere einstückig mit einem koaxial dort angeordneten Zahnrad 17 versehen ist, das mit einer Zahnstange 18 am Schieber 11 in Eingriff steht.

Wird nun der Drehknopf 16 verstellt, dann kann der Schieber 11 in Pfeilrichtung 20 verschoben werden. Durch die Beaufschlagung des Winkelhebels 10 wird die Bewegung des Schiebers 11 mittelbar auf die Einstellspindel 9 übertragen, die den manuell vorgegebenen Temperaturabsenkungswert auf den Bimetallschalter 7 überträgt und diesen entsprechend einstellt. 26 zeigt eine Federkraft, welche die Einstellspindel 9 gegen die Wirkung des Winkelhebels 10 beaufschlagt und den Reglerteil hinreichend spielfrei hält.

Unabhängig von der manuellen Einstellbarkeit des Temperaturabsenkungswertes des Thermostatschalters 7 über den Drehknopf 16, ist außerdem ein von der Vorderseite 19 her bedienbarer Drehknopf 21 für die Einstellung der Raumtemperatur vorgesehen, der über ein koaxial am Drehknopf 21 angeordnetes Zahnrad 22 mit einem Zahnrad 23 an der Einstellspindel 9 in Eingriff steht.

24 bezeichnet ein einseitig auf der Unterseite des Schiebers 11 vorgesehenes Langloch, in dem sich der Kupplungszapfen 25 am Steuerhebel 13 beim Verschieben des Schiebers 11 frei bewegen kann. 27 bezeichnet die schiefe Ebene am Schieber 11 und 28 zeigt eine Einstellskala auf der Vorderseite des Schiebers 11 mit Einstellzahlen, die der schiefen Ebene 27 benachbart sind und die den Temperaturabsenkwerten entsprechen.

Wie die Fig. 1 desweiteren zeigt, ist der Winkelhebel 10 im Eingriff mit der Einstellspindel 9 gabelförmig ausgebildet. 39 bezeichnet Lagerzapfen am Winkelhabel 10, der aus einem Kunststoff hergestellt sein kann.

## Patentansprüche

1. Vorrichtung zur manuellen Temperaturabsenkung für Thermostatschaltuhren, mit einer elektromechanisch angetriebenen Schaltuhr, mit einer zeithaltend umlaufenden Schaltscheibe, mit dort am Umfang angeordneten, schaltprogrammkonform programmierbaren, Schaltreitern, die über einen Auslösehebel einen Bimetallschalter zum Zwecke der Temperaturabsenkung beaufschlagen, mit einer manuellen Einstellung des Temperaturabsenkungswertes und mit einer von der Einstellung des Temperaturabsenkungswertes unabhängigen, manuellen Einstellung der Raumtemperatur am Bimetallschalter, **dadurch gekennzeichnet**, daß der Bimetallschalter (7) mit einer Einstellspindel (9) in Eingriff steht, die einerseits, zur Einstellung der Raumtemperatur, insbesondere über ein Zahnrad (23) mit dem Zahnrad (22) eines Drehknopfes (21) in Eingriff steht, und in die andererseits, zur Einstellung des Temperaturabsenkungswertes, ein Winkelhebel (10) eingreift, der die Einstellspindel (9) in axialer Richtung, zum Zwecke der Temperaturänderung, z.B. zur Nachtabsenkung, verschiebt, und der sowohl von dem motorisch zeitgesteuerten Auslösehebel (12), als auch von einem manuell einstellbaren Schieber (11) beaufschlagbar ist.

2. Vorrichtung nach Anspruch 1, dadurch gekennzeichnet, daß der Winkelhebel (10) im Eingriff mit der Einstellspindel (9) gabelförmig ausgebildet ist.

3. Vorrichtung nach Anspruch 1 und 2, dadurch gekennzeichnet, daß der Schieber (11) zur Beaufschlagung des Winkelhebels (10) mit einer schiefen Ebene (27) ausgestattet ist.

4. Vorrichtung nach Anspruch 3, dadurch gekennzeichnet, daß auf der Vorderseite des Schiebers (11), im benachbarten Bereich zur schiefen Ebene (27), eine Einstellskala (28) mit den Temperaturabsenkungswerten vorgesehen ist.

5. Vorrichtung nach Anspruch 1 bis 4, dadurch gekennzeichnet, daß der Auslösehebel (12) über einen Steuerhebel (13), der mit einem insbesondere einseitig angeordneten Kupplungszapfen (25) versehen ist, mit dem Schieber (11) in Eingriff steht.

6. Vorrichtung nach Anspruch 5, dadurch gekennzeichnet, daß der Auslösehebel (12) und der Steuerhebel (13) einstückig, insbesondere einseitig, miteinander verbunden sind.

7. Vorrichtung nach Anspruch 5 bis 6, dadurch gekennzeichnet, daß der Kupplungszapfen (25) zylindrisch ausgebildet und exzentrisch auf dem Steuerhebel (13) gelagert ist.

8. Vorrichtung nach Anspruch 1 bis 7, dadurch gekennzeichnet, daß der Verzahnungseingriff des Zahnrades (23) auf der Einstellspindel (9) mit dem Zahnrad (22) auf dem Drehknopf (21) über den ganzen axialen Verstellbereich der Einstellspindel (9) zuverlässig gewährleistet ist.

## Claims

1. Device for manual temperature reduction for thermostatic switch clocks, with an electromechanically driven switch clock, with a timekeeping revolving switch dial, with switching cams which are disposed on its circumference and programmable in conformity with the switching programme and act by means of a tripping lever on a bimetallic switch for the purpose of reducing the temperature, with a manual adjustment for the temperature reduction value and with a manual adjustment for the room temperature, independent of the adjustment of the temperature reduction value, at the bimetallic switch, characterised in that the bimetallic switch (7) is in engagement with an adjusting spindle (9) which on the one hand, for adjustment of the room temperature, is in engagement with the toothed wheel (22) of a rotary knob (21), in particular by means of a toothed wheel (23), and on the other hand, for adjustment of the temperature reduction value, is in engagement with an angle lever (10) which displaces the adjusting spindle (9) in the axial direction for the purpose of changing the temperature, e.g. for the reduction at night, and which can be acted upon both by the motor-driven time-controlled tripping lever (12) and by a manually adjustable slide (11).

2. Device according to claim 1, characterised in that the angle lever (10) in engagement with the adjusting spindle (9) is fork-shaped.

3. Device according to claim 1 and 2, characterised in that the slide (11) is provided with an inclined plane (27) for acting on the angle lever (10).

4. Device according to claim 3, characterised in that an adjusting scale (28) with the temperature reduction values is provided on the front side of the slide (11), in the neighborhood of the inclined plane (27).

5. Device according to claims 1 to 4, characterised in that the tripping lever (12) is in engagement with the slide (11) by means of a control lever (13) which is provided with a coupling pin (25) disposed in particular on one side.

6. Device according to claim 5, characterised in that the tripping lever (12) and the control lever (13) are joined together in one piece, in particular on one side.

7. Device according to claims 5 to 6, characterised in that the coupling pin (25) is cylindrical in design and mounted eccentrically on the control lever (13).

8. Device according to claims 1 to 7, characterised in that the toothed engagement of the toothed wheel (23) on the adjusting spindle (9) with the toothed wheel (22) on the rotary knob (21) is assured reliably over the full range of axial adjustment of the adjusting spindle (9).

## Revendications

1. Dispositif pour abaisser manuellement la température sur des minuteries thermostatiques, comportant une minuterie à entraînement électromécanique, laquelle comprend un disque programmeur rotatif chrono-régulateur sur le pourtour duquel sont disposés des taquets de commutation programmables en fonction du programme souhaité qui agissent, par l'intermédiaire d'un levier déclencheur, sur une commande à bi-lame afin d'abaisser la température, avec présence sur la commande à bi-lame d'un réglage manuel de la valeur jusqu'à laquelle on souhaite abaisser la température et d'un réglage manuel de la température ambiante en fonction de cette valeur, caractérisé en ce que la commande à bi-lame (7) est en prise avec une broche de réglage (9) qui est en prise, d'une part pour le réglage de la température ambiante, est en prise, en particulier au moyen d'une roue dentée (23), avec la roue dentée (22) d'un bouton rotatif (21), et sur laquelle, d'autre part, en vue de régler la valeur jusqu'à laquelle on souhaite abaisser la température, agit un levier coudé (10) qui déplace ladite broche (9) en direction axiale dans le but d'un changement de température, par exemple pour un abaissement nocturne, ledit levier coudé (10) pouvant être actionné, d'une part par le levier déclencheur (12) chrono-régulé par moteur et, d'autre part, par un tiroir (11) à réglage manuel.

2. Dispositif selon la revendication 1, caractérisé en ce que le levier coudé (10) en prise avec la broche de réglage (9) est réalisé en forme de fourche.

3. Dispositif selon les revendications 1 et 2, caractérisé en ce que le tiroir (11) destiné à agir sur le levier coudé (10) présente un plan oblique (27).

4. Dispositif selon la revendication 3, caractérisé en ce que, sur la face avant du tiroir (11) au voisinage du plan oblique (27) est prévue une échelle de réglage (28) sur laquelle sont indiquées les valeurs auxquelles il est possible d'abaisser la température.

5. Dispositif selon les revendications 1 à 4, caractérisé en ce que le levier déclencheur (12) est en prise avec le tiroir (11) par l'intermédiaire d'un levier de commande (13) qui est muni d'un ergot d'accouplement (25) disposé en particulier d'un seul côté.

6. Dispositif selon la revendication 5, caractérisé en ce que le levier déclencheur (12) et le levier de commande (13) sont assemblés mutuellement en constituant une seule pièce, en particulier d'un seul côté.

7. Dispositif selon les revendications 5 à 6, caractérisé en ce que l'ergot d'accouplement (25) est de forme cylindrique et monté excentriquement sur le levier de commande (13).

8. Dispositif selon les revendications 1 à 7, caractérisé en ce que l'engrènement entre la roue dentée (23) se trouvant sur la broche (9) et la roue dentée (22) se trouvant sur le bouton rotatif (21) est assuré de manière fiable sur la totalité de la zone de réglage axiale de ladite broche (9).
